Europäisches Patentamt

European Patent Office

Office européen des brevets

(19)

(11) Veröffentlichungsnummer : **0 125 488**
**B1**

(12) **EUROPÄISCHE PATENTSCHRIFT**

(45) Veröffentlichungstag der Patentschrift :
18.06.86

(51) Int. Cl.⁴ : **C 03 B    9/38, C 03 B    9/353**

(21) Anmeldenummer : **84103988.6**

(22) Anmeldetag : **10.04.84**

(54) **Kühlvorrichtung für ein Formwerkzeug zur Verarbeitung von Glas oder anderen thermoplastischen Stoffen.**

(30) Priorität : 16.04.83 DE 3313934

(43) Veröffentlichungstag der Anmeldung :
21.11.84 Patentblatt 84/47

(45) Bekanntmachung des Hinweises auf die Patenterteilung : 18.06.86 Patentblatt 86/25

(84) Benannte Vertragsstaaten :
BE CH DE FR GB IT LI NL SE

(56) Entgegenhaltungen :
EP-A- 0 043 034
EP-A- 0 052 223

(73) Patentinhaber : **Fa. HERMANN HEYE**
**Allee**
**D-3063 Obernkirchen (DE)**

(72) Erfinder : **Schneider, Wilhelm**
**Feldstrasse 22**
**D-3262 Auetal 2 (DE)**

(74) Vertreter : **Kosel, Peter, Dipl.-Ing. et al**
**Patentanwälte Dipl.-Inge. Röse, Kosel & Sobisch**
**Odastrasse 4a Postfach 129**
**D-3353 Bad Gandersheim 1 (DE)**

EP 0 125 488 B1

**Beschreibung**

Die Erfindung betrifft eine Kühlvorrichtung gemäß dem Oberbegriff des Anspruchs 1.

Bei einer bekannten Kühlvorrichtung dieser Art (DE-Patentschrift 3 040 311) weist jeder Anschlußkanal außer dem Gelenkkanalteil noch wenigstens ein weiteres Gelenkkanalteil auf, die relativ zueinander um eine zu der ersten Schwenkachse parallele Schwenkachse schwenkbar sind. Bei gewissen Maschinentypen sind mit dieser bekannten Kühlvorrichtung z. B. durch erkaltete Glasreste in kinematisch kritischen Bereichen auf den Bewegungsbahnen der Gelenkkanalteile Schwierigkeiten aufgetreten. Ferner ließ sich die bekannte Kühlvorrichtung nicht in Maschinen mit einem nur verhältnismäßig geringen Angebot an freier Bauhöhe einsetzen. Durch die verhältnismäßig große Bauhöhe des Anschlußkanals konnten ferner verhältnismäßig hohe Formwerkzeuge in den gegebenen Maschinen nicht eingesetzt werden.

Der Erfindung liegt die Aufgabe zugrunde, den Anschlußkanal kinematisch zu verbessern, sowie seine Störanfälligkeit und den Raumbedarf hinsichtlich der baulichen Abmessungen und des Bewegungsraums zu verringern. Es sollen auch verhältnismäßig hohe Formwerkzeuge in der Maschine benutzbar sein.

Diese Aufgabe ist durch die Anweisung des Kennzeichnungsteils des Anspruchs 1 gelöst. Die mit der Schwenkung kombinierte Verschiebebewegung des Gelenkkanalteils erweist sich als kinematisch äußerst vorteilhaft und betriebssicher. Die Verschiebeebene läßt sich mit nur geringem Aufwand für das Druckfluid befriedigend abdichten. Der Anschlußkanal weist geringere Bauhöhe und Gewicht auf und beansprucht einen verhältnismäßig geringen Bewegungsraum in der Maschine. Wegen der geringen Bauhöhe des Anschlußkanals lassen sich insbesondere in der Fertigformstation der Maschine Formwerkzeuge von verhältnismäßig großer Höhe, also axialer Erstreckung, einsetzen. Sollen für andere Artikel Formwerkzeuge von geringerer Höhe verwendet werden, kann die Höhenanpassung zwischen jeder Druckfluidverteilvorrichtung und dem Gelenkkanalteil auf einfache Weise durch Zwischensetzen eines rohrförmigen Verlängerungsstücks entsprechender Länge erfolgen, wie dies schon in der vorerwähnten DE-Patentschrift 3 040 311 offenbart ist.

Der Merkmale des Anspruchs 2 bieten eine funktionssichere und einfache Möglichkeit, das Gelenkkanalteil um die dritte Schwenkachse zu schwenken. Die zweite Schwenkachse und auch die dritte Schwenkachse können relativ zu der ersten Schwenkachse in jedem Fall so angeordnet werden, daß sich insgesamt für jeden mit dieser Kühlvorrichtung auszustattenden Maschinentyp optimale kinematische Verhältnisse für das Gelenkkanalteil ergeben.

Gemäß Anspruch 3 steht eine konstruktiv einfache und robuste Schwenklagerung des Gelenkkanalteils um die dritte Schwenkachse zur Verfügung.

Das Merkmal des Anspruchs 4 sichert die Schwenklagerung des Gelenkkanalteils.

Gemäß Anspruch 5 ist das Gelenkkanalteil auf einfache und funktionssichere Weise mit dem weiteren Gelenkkanalteil verschiebbar verbunden. Die Nutensteine sorgen für eine großflächige und verschleißarme Verschiebeführung.

Die Dichtungen gemäß den Ansprüchen 6 und 10 sind einfach und betriebssicher und führen insbesondere bei dem nur verhältnismäßig geringen erforderlichen Gebläsedruck des Druckfluids zu nur unwesentlichen Fluidleckverlusten. Solche Dichtungen sind gerade bei den hohen Betriebstemperaturen dieser Maschinen besonders betriebssicher und standfest.

Die Ausbildung des Anschlußkanals gemäß Anspruch 7 ist von minimaler Bauhöhe und eignet sich daher besonders für den Einsatz in Maschinenstationen, in denen für den Einbau nur verhältnismäßig geringe freie Bauhöhe zur Verfügung steht.

Die Merkmale des Anspruchs 8 gewährleisten mit einfachen Mitteln die Schwenkung des Gelenkkanalteils um die dritte Schwenkachse.

Durch die Vorspannung gemäß Anspruch 9 wird das Gelenkkanalteil mit einer Kraft von wählbarer Größe an seine Gegenfläche an der Maschine angedrückt. So lassen sich im Betrieb ein Kippen des Gelenkkanalteils um eine waagerechte Achse und unerwünscht hohe Fluidleckverluste vermeiden.

Gemäß Anspruch 11 ist auf besonders günstige Weise die ständige Verbindung der Einlaßöffnung des Gelenkkanalteils mit der Auslaßöffnung des Zuführkanals gewährleistet.

Durch die Ausbildung gemäß Anspruch 12 kann die Auslaßöffnung des Zuführkanals verhältnismäßig klein gehalten werden.

Weitere Merkmale und Vorteile der Erfindung ergeben sich aus den Zeichnungen und der nachfolgenden Beschreibung von Ausführungsbeispielen der Erfindung. Es zeigen :

Figur 1 die Draufsicht auf einen Teil einer Vorformstation einer Sektion einer I.S.-Glasformmaschine mit Kühlvorrichtung, teilweise im Schnitt,

Figur 2 eine der Fig. 1 entsprechende Draufsicht auf die Vorformstation, jedoch ohne Vorformzange und Vorformen,

Figur 3 eine perspektivische Schnittansicht der gemäß den Fig. 1 und 2 verwendeten Kühlvorrichtung, in Explosionsdarstellung,

Figur 4 die Schnittansicht nach Linie 4-4 in Fig. 2,

Figur 5 die Schnittansicht nach Linie 5-5 in Fig. 4,

Figur 6 die Schnittansicht nach Linie 6-6 in Fig. 5,

Figur 7 die Schnittansicht nach Linie 7-7 in Fig. 4,

Figur 8  die Schnittansicht nach Linie 8-8 in Fig. 4,

Figur 9  eine der Fig. 1 entsprechende Draufsicht auf einen Teil einer Fertigformstation der Sektion der I.S.-Glasformmaschine gemäß Fig. 1 mit Kühlvorrichtung, teilweise im Schnitt,

Figur 10  einen Querschnitt durch die Fertigformstation gemäß Fig. 9, im wesentlichen nach Linie 10-10 in Fig. 11,

Figur 11  die Schnittansicht nach Linie 11-11 in Fig. 10 und

Figur 12  die Schnittansicht nach Linie 12-12 in Fig. 10. Fig. 1 zeigt eine Vorformstation 1 einer Sektion 2 einer sogenannten I.S.-Glasformmaschine. Mit der Sektion 2 werden aus einem nicht gezeichneten Tropfenspeiser kommende Tropfen schmelz- bzw. zähflüssigen Glases im Preß-Blas-Verfahren zu Hohlglasgegenständen geformt.

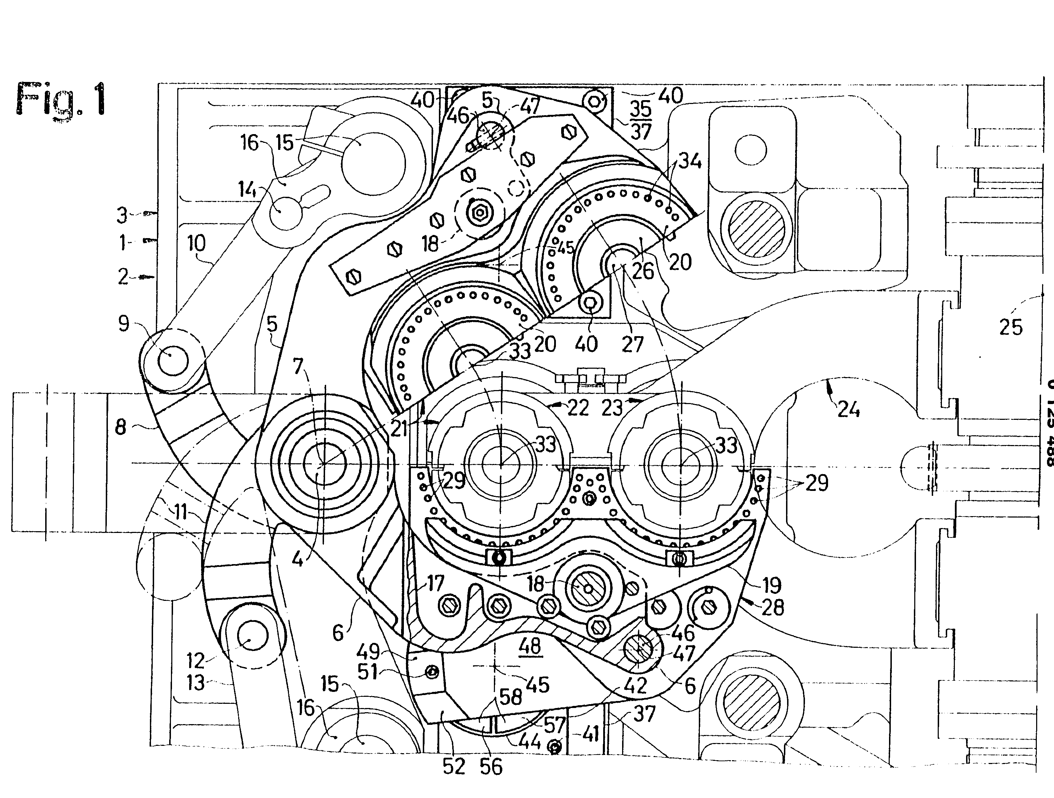

Mit einem Maschinengestell 3 der Sektion 2 ist eine senkrecht stehende Scharniersäule 4 fest verbunden, an der Vorformzangenhälten 5 und 6 schwenkbar gelagert sind. In Fig. 1 ist die Vorformzangenhälfte 5 in ihrer geöffneten und die Vorformzangenhälfte 6 in ihrer geschlossenen Stellung gezeichnet. Die Scharniersäule 4 weist eine erste Schwenkachse 7 als Längsachse auf. An der Vorformzangenhälfte 6 ist ein rückwärtiger Arm 8 befestigt, der über einen Bolzen 9 an einer Lasche 10 angelenkt ist. In ähnlicher Weise erstreckt sich von der Vorformzangenhälfte 5 ein rückwärtiger Arm 11, der über einen Bolzen 12 mit einer Lasche 13 gekuppelt ist. Jede Lasche 10, 13 ist an einem zugehörigen Kurbelzapfen 14 einer an einer Antriebswelle 15 befestigten Kurbel 16 angelenkt. Die Antriebswellen 15 sind synchron und gegensinnig in an sich bekannter Weise schwenkend antreibbar und bewegen im Fertigungszyklus die Vorformzangenhälften 5, 6 zwischen den in Fig. 1 gezeichneten Endstellungen.

In einer seitlichen Ausnehmung 17 jeder Vorformzangenhälfte 5, 6 ist an einem Wippenbolzen 18 eine Wippe 19 schwenkbar gelagert. In jede Wippe 19 sind zwei in Fig. 1 bei der Vorformzangenhälfte 5 eingezeichnete Vorformhälften 20 eines als Doppelform ausgebildeten Formwerkzeugs 21 einhängbar. Das Formwerkzeug 21 weist außerdem zwei geteilte Mündungswerkzeuge 22 und 23 auf, die in an sich bekannter Weise unabhängig von den Vorformzangenhälften 5, 6 an einem Invertarm 24 der Sektion 2 um die Längsachse 25 des Invertarms 24 schwenkbar sind. In der geschlossenen Stellung der Vorformzangenhälften 5, 6 übergreifen untere Bereiche der Vorformhälften 20 beider Vorformzangenhälften 5, 6 obere Bereiche der geschlossenen Mündungswerkzeuge 22, 23 und bilden dann geschlossene Vorformen. Durch eine obere Bodenöffnung 26 der geschlossenen Vorformhälften 20 wird dann in an sich bekannter Weise ein Glasposten in die geschlossene Vorform eingebracht und durch einen von unten durch die Mündungswerkzeuge 22, 23 nach oben fahrenden Preßstempel 27 zu einem Külbel verformt.

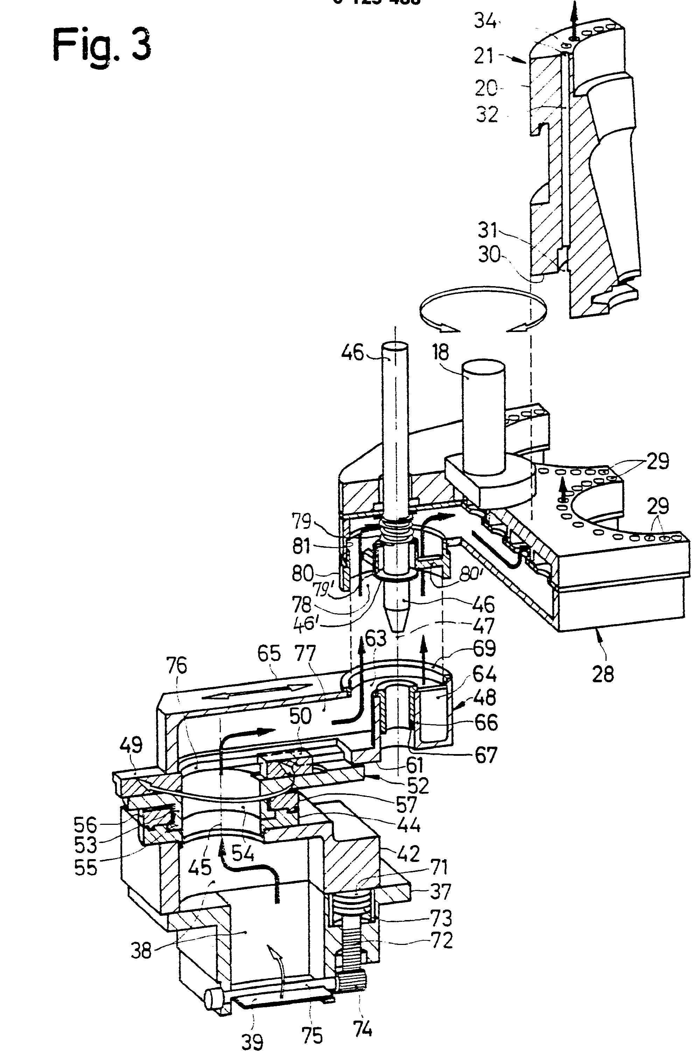

An jeder Vorformzangenhälfte 5, 6 ist eine Druckfluidverteilvorrichtung 28 befestigt, die jeweils zwei halbkreisförmige Anordnungen von nach oben gerichteten Auslaßöffnungen 29 für ein Druckfluid, in diesem Fall Druckluft, aufweist (vgl. auch Fig. 3). Auf die Auslaßöffnungen 29 sind gemäß Fig. 3 die Vorformhälften 20 mit einer Ringfläche 30 aufgesetzt, die mit den Auslaßöffnungen 29 fluchtende Einlaßöffnungen 31 von Kanälen 32 aufweist. Jeder Kanal 32 der Vorformhälften 20 liegt in einer durch eine Längsachse 33 (Fig. 1) der Vorform verlaufenden Ebene und weist oben eine Auslaßöffnung 34 auf.

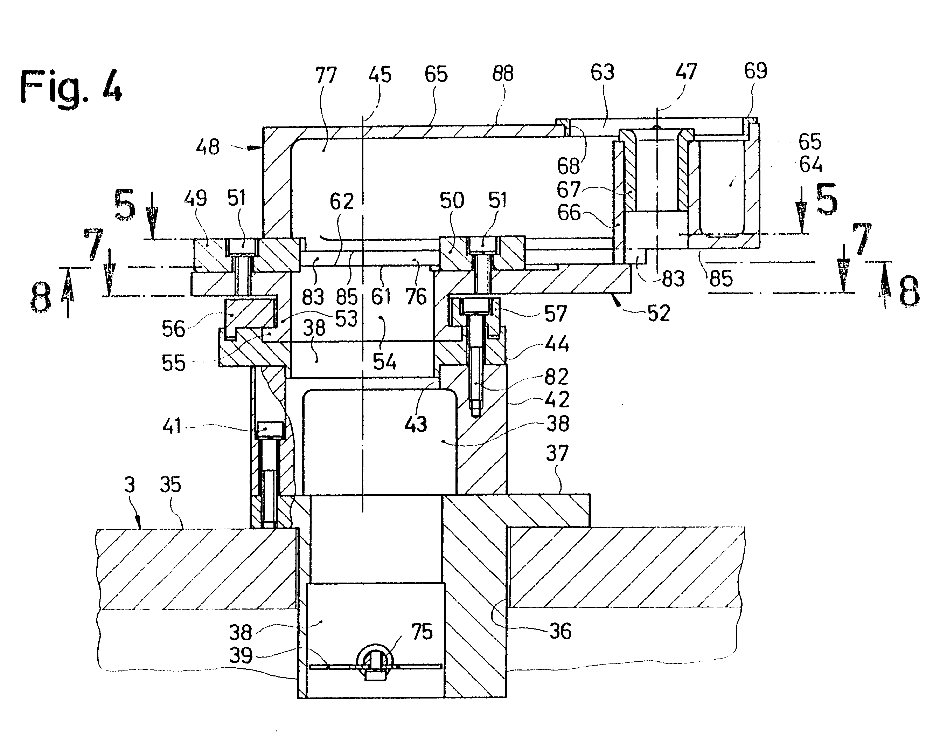

Das Maschinengestell 3 weist eine eine Kühlluftbox oben begrenzende Kopfplatte 35 auf, die gemäß Fig. 4 für jede Druckfluidverteilvorrichtung 28 eine Durchbrechung 36 besitzt. In jede Durchbrechung 36 ist ein Einsatz 37 mit einer in einem Zuführkanal 38 schwenkbar angeordneten Ventilklappe 39 (Fig. 4) eingesetzt und mit Schrauben 40 an der Kopfplatte 35 festgelegt. Jeder Einsatz 37 trägt einen daran mit Schrauben 41 befestigten Aufsatz 42, der einen weiteren Teil des Zuführkanals 38 für die Kühlluft umschließt. In eine obere Aufnahmebohrung 43 (Fig. 4) Aufsatzes 42 ist eine Lagerbuchse 44 eingesetzt, die einen oberen, kreiszylindrischen Teil des Zuführkanals 38 mit einer eine dritte Schwenkachse 45 definierenden Längsachse umschließt (Fig. 4). Die beiden dritten Schwenkachsen 45 sind jeweils parallel zu der ersten Schwenkachse 7.

An jeder Druckfluidverteilvorrichtung 28 ist ein Antriebsbolzen 46 in seitlichem Abstand von dem Wippenbolzen 18 befestigt. Die Längsachse jedes Antriebsbolzens 46 definiert eine zweite Schwenkachse 47, die parallel zu der ersten Schwenkachse 7 und der dritten Schwenkachse 45 ist.

Gemäß Fig. 3 ragen die Antriebsbolzen 46 nach unten hin über eine untere Begrenzung der Druckfluidverteilvorrichtung 28 hinaus und greifen jeweils in ein Gelenkkanalteil 48 ein. Die Antriebsbolzen 46 und damit die zweiten Schwenkachsen 47 schwenken während des Öffnens und Schließens der Vorformzangenhälften 5, 6 auf einem Kreisbogen um die erste Schwenkachse 7. Die Antriebsbolzen 46 nehmen in dieser Schwenkbewegung die Gelenkkanalteile 48 mit, so daß die Gelenkkanalteile 48 sich in einer zu den Schwenkachsen 7, 45, 47 rechtwinkligen Verschiebeebene bewegen.

Jedes Gelenkkanalteil 48 ist durch Nutensteine 49 und 50 (Fig. 3) relativ zu dem Zuführkanal 38 in der Verschiebeebene verschiebbar geführt. Die Nutensteine 49, 50 sind mit Schrauben 51 (Fig. 4) an einem weiteren Gelenkkanalteil 52 befestigt, das um die dritte Schwenkachse 45 schwenkbar gelagert ist. Dazu weist das weitere Gelenkkanalteil 52 einen sich nach unten erstreckenden Lagerring 53 (Fig. 4) auf, der einen ständig mit dem Zuführkanal 38 verbundenen Verbindungskanal 54 umschließt. Ein unterer Außenflansch 55 ist durch Ringhälften 56 und 57 eines längsgeteilten Halterings 58 in einer komplementären Ringnut der Lagerbuchse 44 gehalten (Fig. 4).

Die Anordnung ist so getroffen, daß bei einer Schwenkbewegung der Vorformzangenhälften 5, 6 die Gelenkkanalteile 48 einerseits durch die Antriebsbolzen 46 um die zweiten Schwenkachsen 47 schwenkend mitgenommen und andererseits durch die Nutensteine 49, 50 derart längsgeführt werden, daß eine Längsachse jedes Gelenkkanalteils 48 stets die zugehörige dritte Schwenkachse 45 schneidet. Die Gelenkkanalteile 48 vollführen also eine kombinierte Schwenk- und Verschiebebewegung in der vorerwähnten Verschiebeebene.

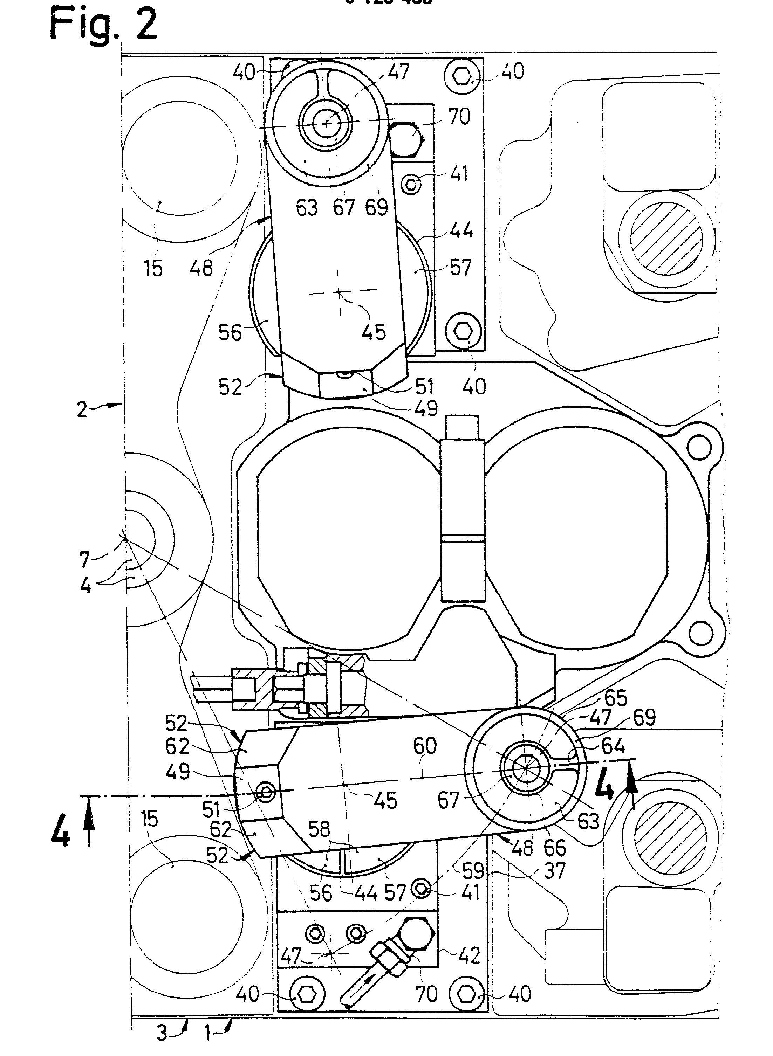

Fig. 2 bietet eine bessere Übersicht über die Gelenkkanalteile 48 und ihren Bewegungsraum in der Sektion 2. Die obere Hälfte der Fig. 2 zeigt das dortige Gelenkkanalteil 48 in seiner Schwenkschiebestellung bei voll geöffneter Vorformzangenhälfte 5 (Fig. 1). Dagegen ist in der unteren Hälfte der Fig. 2 das Gelenkkanalteil 48 in seiner anderen Schwenkschiebestellung bei geschlossener Vorformzangenhälfte 6 (Fig. 1) dargestellt. Die untere Hälfte der Fig. 2 zeigt außerdem, daß die zweite Schwenkachse 47 sich zwischen der voll geschlossenen und voll geöffneten Stellung der Vorformzangenhälfte 6 auf einem Kreisbogen 59 um die erste Schwenkachse 7 bewegt. Außer dieser Schwenkbewegung vollführt das Gelenkkanalteil 48 zwischen den erwähnten Endstellungen eine durch die Nutensteine 49, 50 (Fig. 4) geführte Verschiebebewegung in Richtung seiner Längsachse 60. Dabei gleitet das Gelenkkanalteil 48 mit einer unteren Fläche 61 auf einer oberen Fläche 62 des weiteren Gelenkkanalteils 52. Zwischen den Flächen 61, 62 befindet sich ein geringer Spalt. Der Druckfluidverlust durch diesen Spalt ist insbesondere bei verhältnismäßig geringem Gebläsedruck des Druckfluids vernachlässigbar gering.

Fig. 2 zeigt eine Auslaßöffnung 63 der Gelenkkanalteile 48 von fast vollständiger Kreisringform. Die Kreisringform wird nur durch einen radialen Steg 64 unterbrochen, der eine Gehäusewand 65 des Gelenkkanalteils 48 mit einem zu der zweiten Schwenkachse 47 konzentrischen Hohlzylinder 66 des Gelenkkanalteils 48 verbindet. In das obere Ende des Hohlzylinders 66 ist eine Lagerbuchse 67 zur Aufnahme des unteren Endes des Antriebsbolzen 46 (Fig. 3) eingesetzt. Die Auslaßöffnung 63 wird außen durch einen in eine Bohrung 68 (Fig. 4) der Gehäusewand 65 eingesetzten Winkelring 69 begrenzt.

Fig. 2 zeigt ferner an jedem Aufsatz 42 einen Anschlußnippel 70 für die Zuleitung von Steuerdruckluft. Die Steuerdruckluft wird durch ein nicht näher gezeichnetes Kanalsystem in dem Aufsatz 42 in einen Zylinder 71 gemäß Fig. 3 eingeleitet und betätigt einen mit einer Zahnstange 72 verbundenen Kolben 73. Mit der Zahnstange 72 steht ein Ritzel 74 auf einer Welle 75 der Ventilklappe 39 im Eingriff. So läßt sich die Ventilklappe 39 zwischen einer den Zuführkanal 38 weitgehend schließenden und einer den Zuführkanal 38 voll öffnenden Stellung ferngesteuert einstellen.

In Fig. 3 ist der Strömungsweg der Kühlluft mit ausgezogenen Pfeilen und sind Bewegungsrichtungen mit Umrißpfeilen angedeutet. Die Kühlluft strömt aus dem Verbindungskanal 54 durch eine in Richtung der zweiten Schwenkachse 47 langgestreckte Einlaßöffnung 76 in der unteren Fläche 61 des Gelenkkanalteils 48 in einen Innenraum 77 des Gelenkkanalteils 48 und von dort zu der Auslaßöffnung 63.

Die Druckfluidverteilvorrichtung 28 weist eine zu der zweiten Schwenkachse 47 konzentrische kreisringförmige Einlaßöffnung 78 auf, die die Kühlluft aus der Auslaßöffnung 63 übernimmt. Die Einlaßöffnung 78 wird von einem rohrförmigen Verlängerungsstück 80 begrenzt, das im zusammengebauten Zustand mit einer unteren ringförmigen Stirnfläche auf einer oberen Gegenfläche des Winkelringes 69 des Gelenkkanalteils 48 liegt und mit diesem eine Gleitdichtung bildet. Eine Druckfeder 79 drückt das Verlängerungsstück 80 nach unten in Dichtberührung mit dem Winkelring 69. Die Kühlluft strömt von der Einlaßöffnung 78 in Richtung der ausgezogenen Pfeile durch ein Kammersystem der Druckfluidverteilvorrichtung 28, bis sie nach oben hin durch die Auslaßöffnungen 29 austritt und in die Kanäle 32 der Vorformhälften 20 gelangt, von denen in Fig. 3 nur eine angedeutet ist.

Das rohrförmige Verlängerungsstück 80 ist mit einem verjüngten oberen Teil in einer Aufnahmebohrung 81 der Druckfluidverteilvorrichtung 28 axial verschiebbar geführt. Es weist radial nach innen zu einer Tasse 79' führende Stege 80' auf. Die Tasse 79' liegt oben an der Druckfeder 79 und, solange das Gelenkkanalteil 48 nicht montiert ist, unten an einem Haltebund 46' des Antriebsbolzens 46 an. Wenn sich bei einem Wechsel der herzustellenden Hohlglasgegenstände die Länge der Vorformhälften 20 ändert, wird der Grundaufbau der Kühlvorrichtung von dem Einsatz 37 bis hinauf zu dem Gelenkkanalteil 48 völlig unverändert gelassen. Die Höhenanpassung an die neue Länge der Vorformhälften 20 findet vielmehr durch Austausch des rohrförmigen Verlängerungsstücks 80 gegen ein in der Länge angepaßtes ähnliches Verlängerungsstück statt.

Gemäß Fig. 4 sind die Ringhälften 56, 57, die Lagerbuchse 44 und der Aufsatz 42 durch Schrauben 82 in axialer Richtung gegeneinander gespannt. Die in Fig. 4 gezeigte Schraube 82 ist um 45° versetzt gezeichnet. Die Passung zwischen den Ringhälften 56, 57 einerseits und der Lagerbuchse 44 ist dabei relativ zu dem unteren Außenflansch 55 des Lagerringes 53 derart, daß zwischen diesen Teilen ein die freie Relativschwenkung des Lagerringes 53 um die dritte Schwenkachse 45 gestattendes, verhältnismäßig kleines Spiel verbleibt. Dieses Spiel führt zu nur unwesentlichen Druckfluidleckverlusten.

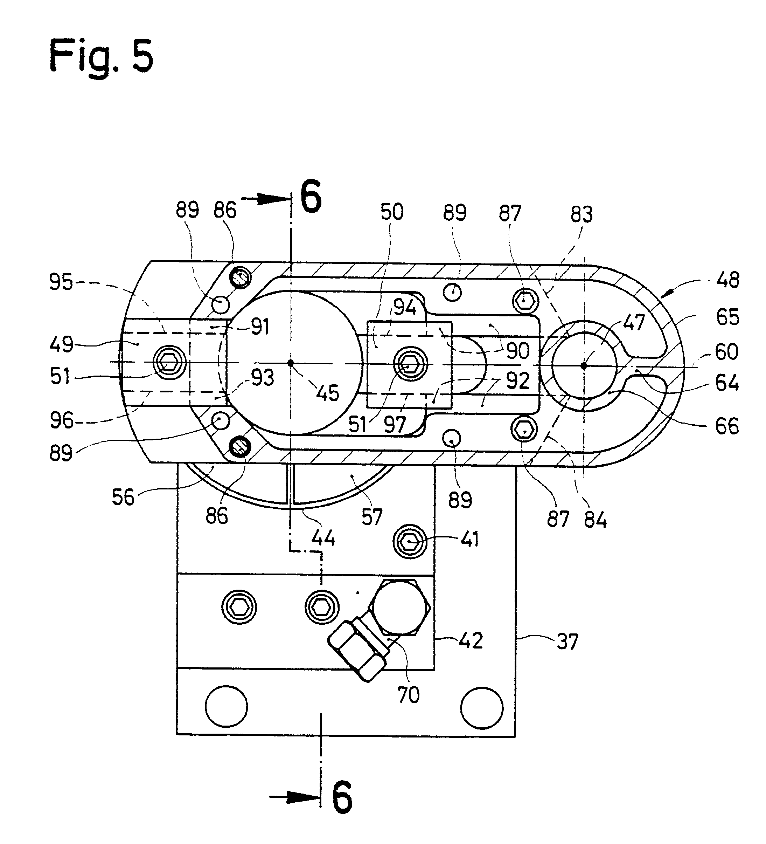

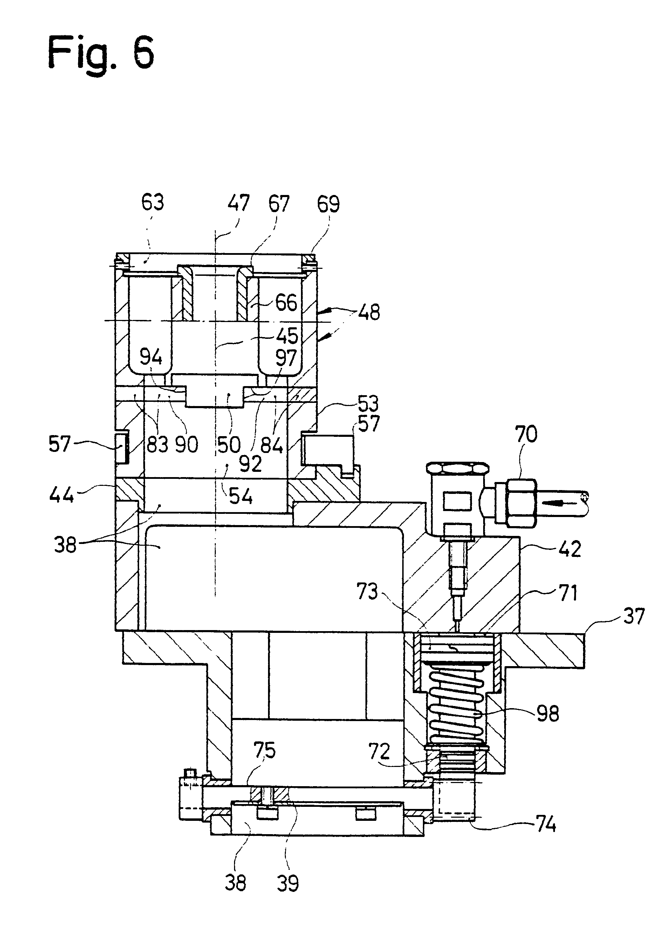

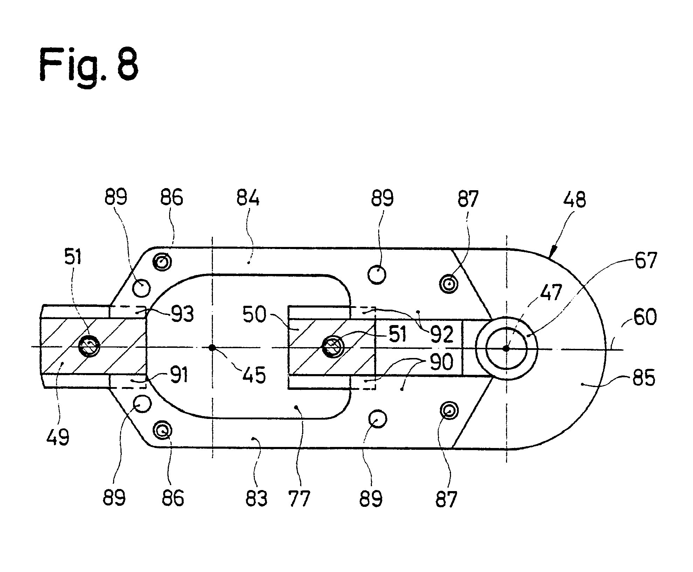

Die untere Fläche 61 des Gelenkkanalteils 48 wird durch Schleißleisten 83 und 84 (Fig. 6 und 8) definiert, die an einer Unterseite 85 des Gelenkkanalteils 48 mit Schrauben 86 und 87 (Fig. 5 und 8) befestigt sind. Die Schrauben 86 erstrecken sich in nicht dargestellter Weise bis zu einer Oberseite 88 des Gelenkkanalteils 48.

Fig. 5 zeigt, daß jede Schleißleiste 83, 84 durch zwei Paßstifte 89 relativ zu dem Gelenkkanalteil 48 positioniert ist.

Die Schleißleisten 83, 84 bilden im Bewegungsbereich der Nutensteine 49, 50 Führungsleisten 90 und 91 sowie 92 und 93, die in seitlichen Nuten 94 bis 97 der Nutensteine 49, 50 zur Längsführung des Gelenkkanalteils 48 in Richtung der Längsachse 60 eingreifen.

Fig. 6 zeigt die im wesentlichen T-förmige Querschnittsfläche des Nutensteins 50, die auch der Nutenstein 49 aufweist. In Fig. 6 ist der Anschlußnippel 70 für die Zuleitung der Steuerluft um 45° versetzt gezeichnet. In Fig. 6 befindet sich die Ventilklappe 39 in ihrer den Zuführkanal 38 schließenden Stellung, in der der Kolben 73 unter Vorspannung durch eine Druckfeder 98 in seiner oberen Endstellung an der Unterseite des Aufsatzes 42 anliegt. Wird nun Steuerdruckluft durch den Anschlußnippel 70 in den Zylinder 71 eingeleitet, wird die Ventilklappe 39 unter zunehmender Öffnung des Zuführkanals 38 geschwenkt.

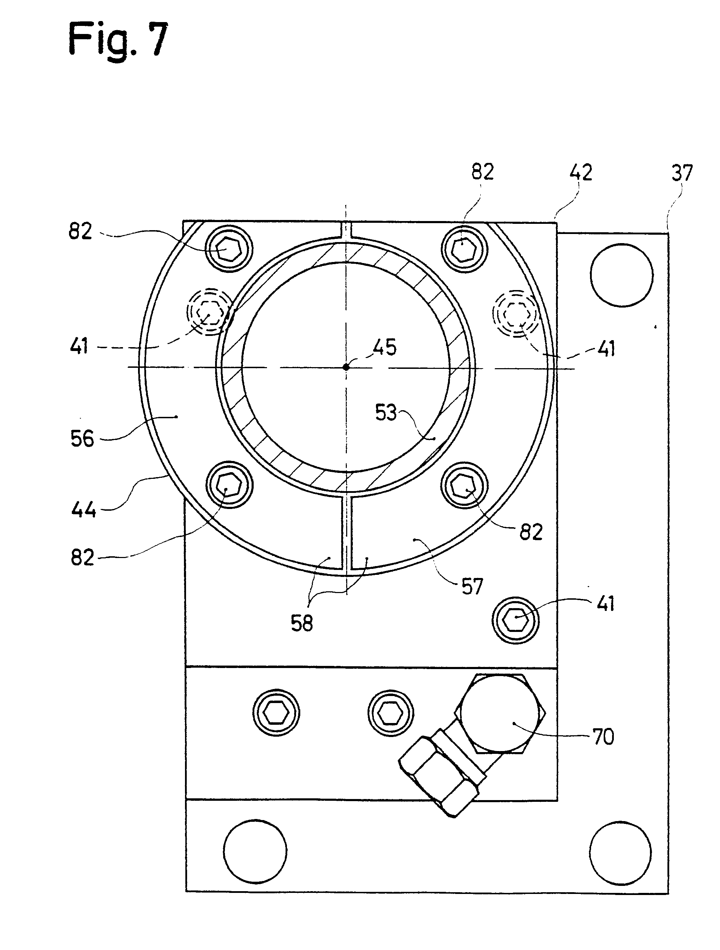

In Fig. 7 sind die genaue Ausbildung der Ringhälften 56, 57 des Halterings 58 sowie die Lage der Schrauben 41 und 82 verdeutlicht.

Fig. 8 zeigt vor allem die genaue Ausbildung der Schleißleisten 83, 84.

Die in den Fig. 1 bis 8 dargestellte Ausführungsform der Kühlvorrichtung wurde für die Vorformstation 1 der Sektion 2 der I.S.-Glasformmaschine eingesetzt. Diese Ausführungsform ist jedoch auf diesen Einsatzfall nicht eingeschränkt, sondern kann bei ausreichenden Platzverhältnissen auch in der Fertigformstation einer solchen Sektion und grundsätzlich auch in allen sonstigen Maschinen gemäß dem Oberbegriff des Anspruchs 1 eingesetzt werden.

Bei dem Ausführungsbeispiel gemäß den nachfolgenden Figuren sind gleiche Teile wie in den vorangegangenen Figuren mit gleichen Bezugszahlen versehen.

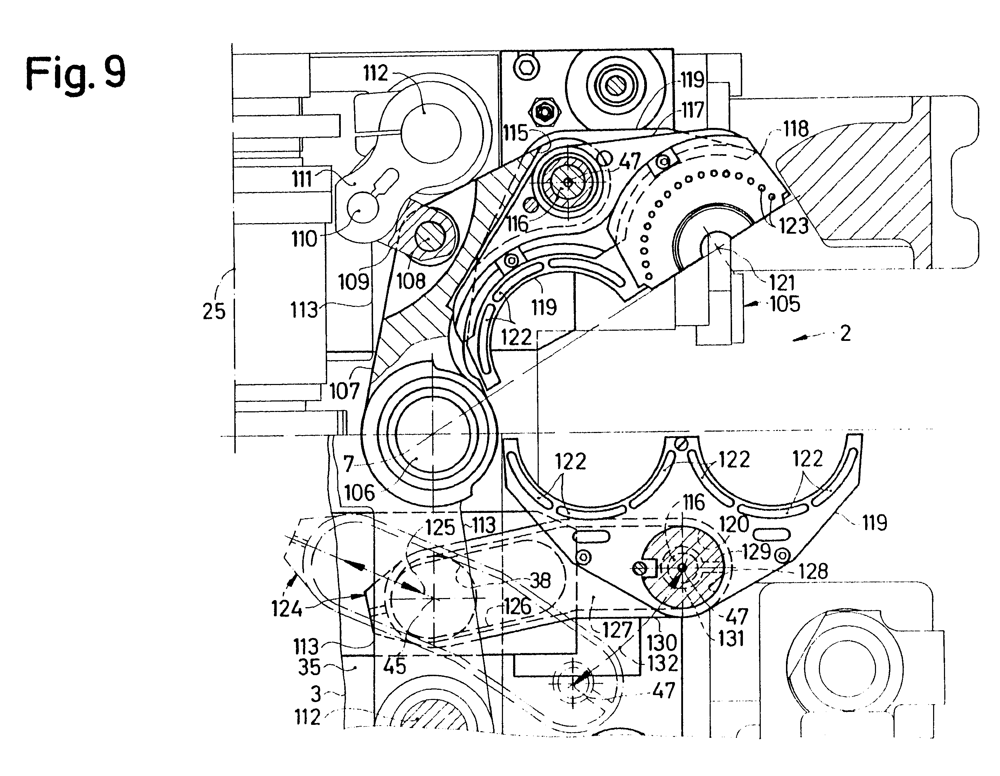

Fig. 9 zeigt eine Fertigformstation 105 der Sektion 2 der I.S.-Glasformmaschine gemäß den vorangegangenen Figuren.

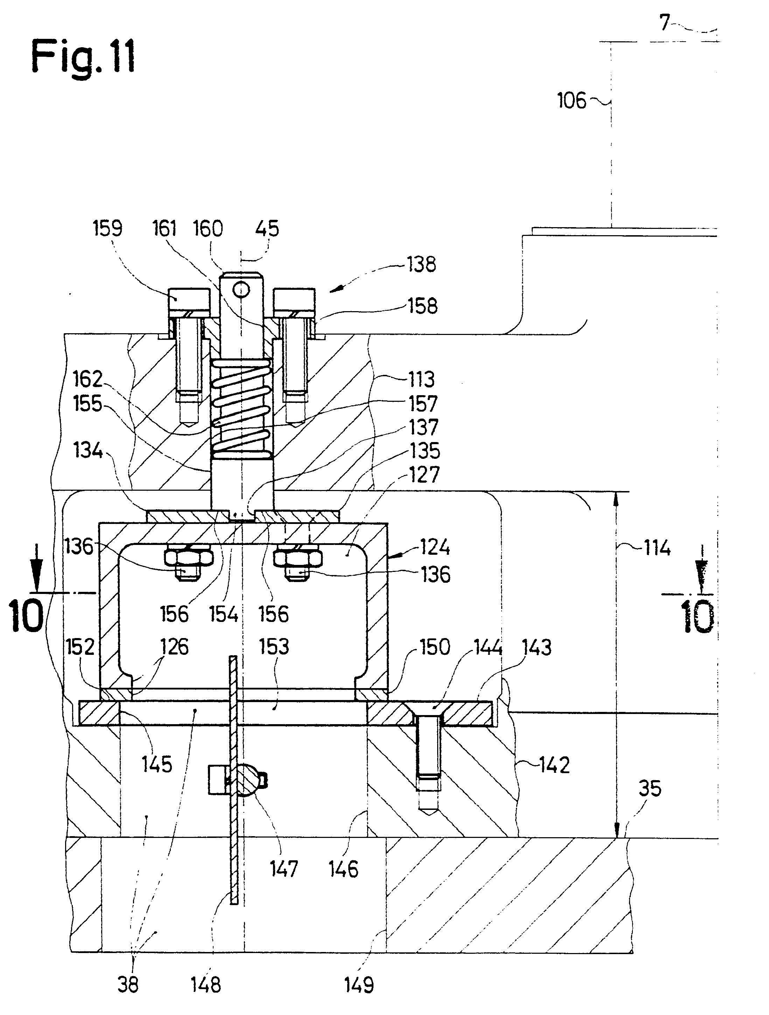

An einer Scharniersäule 106 sind zwei Fertigformzangenhälften 107 schwenkbar gelagert, von denen in Fig. 9 nur die obere zur Verdeutlichung der Zeichnung dargestellt ist. Jede Fertigformzangenhälfte 107 ist mit einem Bolzen 108 an einer Lasche 109 angelenkt, die an einem Kurbelzapfen 110 einer Kurbel 111 angelenkt ist, die durch eine in dem Maschinengestell 3 gelagerte Antriebswelle 112 schwenkend antreibbar ist. Die beiden Antriebswellen 112 und die Scharniersäule 106 sind durch eine Traverse 113 miteinander verbunden, die sich in einem senkrechten Abstand 114 (Fig. 11) von der Kopfplatte 35 des Maschinengestells 3 befindet.

In einer seitlichen Ausnehmung 115 jeder Fertigformzangenhälfte 107 ist an einem an der Fertigformzangenhälfte 107 befestigten Wippenbolzen 116 eine Wippe 117 schwenkbar gelagert. In jede Wippe 117 sind zwei Fertigformhälften 118 eingehängt, von denen in der oberen Hälfte der Fig. 9 nur eine gezeigt ist. Die dargestellte Sektion 2 arbeitet also im Doppelformbetrieb und stellt in jedem Arbeitszyklus gleichzeitig zwei Hohlglasgegenstände her.

An der Unterseite jeder Wippe 117 ist eine Druckfluidverteilvorrichtung 119 befestigt, die in ähnlicher Weise aufgebaut ist und wirkt wie die Druckfluidverteilvorrichtungen 28 der Vorformstation 1. Jede Druckfluidverteilvorrichtung 119 weist eine Einlaßöffnung 120 für Kühlluft auf, die koaxial mit der die zweite Schwenkachse 47 definierenden Längsachse des Wippenbolzens 116 ist. Ausgehend von der Einlaßöffnung 120 wird die Kühlluft im Inneren jeder Druckfluidverteilvorrichtung 119 in Teilströme aufgeteilt, die schließlich aus konzentrisch zu der Längsachse 121 der zugehörigen Fertigformhälfte 118 gekrümmten Schlitzen 122 der Druckfluidverteilvorrichtung 119 aus dieser austritt. Von den Schlitzen 122 gelangt die Kühlluft in darauf aufsitzende Kanäle 123, die jeweils in einer durch die Längsachse 121 verlaufenden Ebene liegen und, wie Fig. 9 zeigt, an der Oberseite der Fertigformhälften 118 ins Freie münden.

Im wesentlichen unterhalb der Traverse 113 ist zu jeder Seite der Scharniersäule 106 eine den Zuführkanal 38 für die Kühlluft definierende Bohrung in der Kopfplatte 35 angebracht. Ein Gelenkkanalteil 124 stellt zwischen jedem Zuführkanal 38 und der Einlaßöffnung 120 der zugehörigen Druckfluidverteilvorrichtung 119 eine ständige Verbindung her. So kann die Kühlluft unabhängig von der Schwenkstellung der Fertigformzangenhälften 107 aus einer nicht gezeichneten Kühlluftbox des Maschinengestells 3 ständig in die Kanäle 123 der Fertigformhälften 118 gelangen. In Fig. 9 zeigt übrigens die obere Hälfte die voll geöffnete und die untere Hälfte die voll geschlossene Schwenkstellung der Druckfluidverteilvorrichtungen 119. In der unteren Hälfte der Fig. 9 ist das Gelenkkanalteil 124 mit ausgezogenen Linien für die erwähnte geschlossene Stellung und mit strichpunktierten Linien für die erwähnte geöffnete Schwenkstellung der zugehörigen Druckfluidverteilvorrichtung 119 gezeichnet. Man sieht, daß das Gelenkkanalteil 124 einerseits eine Schwenkung um die zweite Schwenkachse 47 und andererseits eine Verschiebung in Richtung seiner Längsachse 125 erfährt, wobei diese Längsachse stets die durch die Längsachse des Zuführkanals 38 definierte dritte Schwenkachse 45 schneidet.

Das Gelenkkanalteil 124 weist an seiner Unterseite eine langgestreckte Einlaßöffnung 126 auf, die stets in Verbindung mit dem Zuführkanal 38 steht und in der Breite etwa dem Durchmesser des Zuführkanals 38 entspricht. Von der Einlaßöffnung 126 gelangt die Kühlluft durch einen Innenraum 127 des Gelenkkanalteils 124 zu dessen Auslaßöffnung 128, die koaxial mit der zweiten Schwenkachse 47 angeordnet und durch einen radialen Steg 129 einer Gehäusewand 130 des Gelenkkanalteils 124 unterbrochen ist. Der Steg 129 stützt einen mit der zweiten Schwenkachse 47 koaxialen Hohlzylinder 131 des Gelenkkanalteils 124.

Aus Fig. 9 geht hervor, daß das Gelenkkanalteil 124 während seiner Schwenkschiebebewegung zwischen den unten in Fig. 9 eingetragenen beiden Endstellungen sich mit der Längsachse seiner Auslaßöffnung 128, die identisch mit der zweiten Schwenkachse 47 ist, auf einem Kreisbogen 132 um die erste Schwenkachse 7 bewegt.

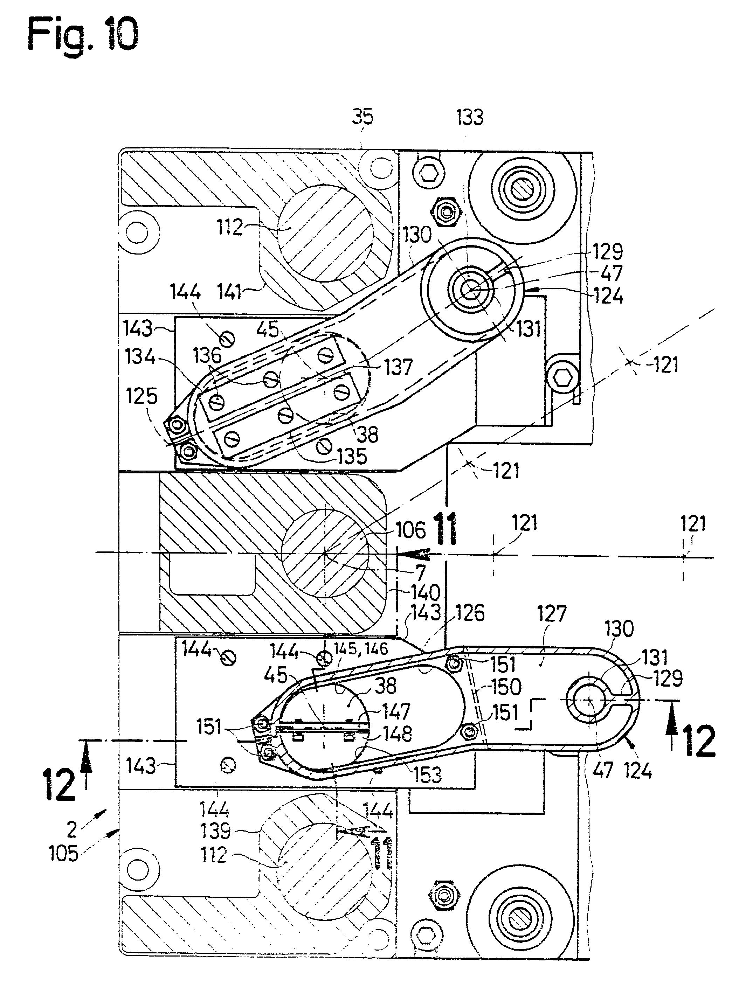

In Fig. 10 zeigt die obere Hälfte die Draufsicht auf das eine Gelenkteil 124 und die untere Hälfte die Schnittansicht nach Linie 10-10 in Fig. 11 durch das andere Gelenkkanalteil 124.

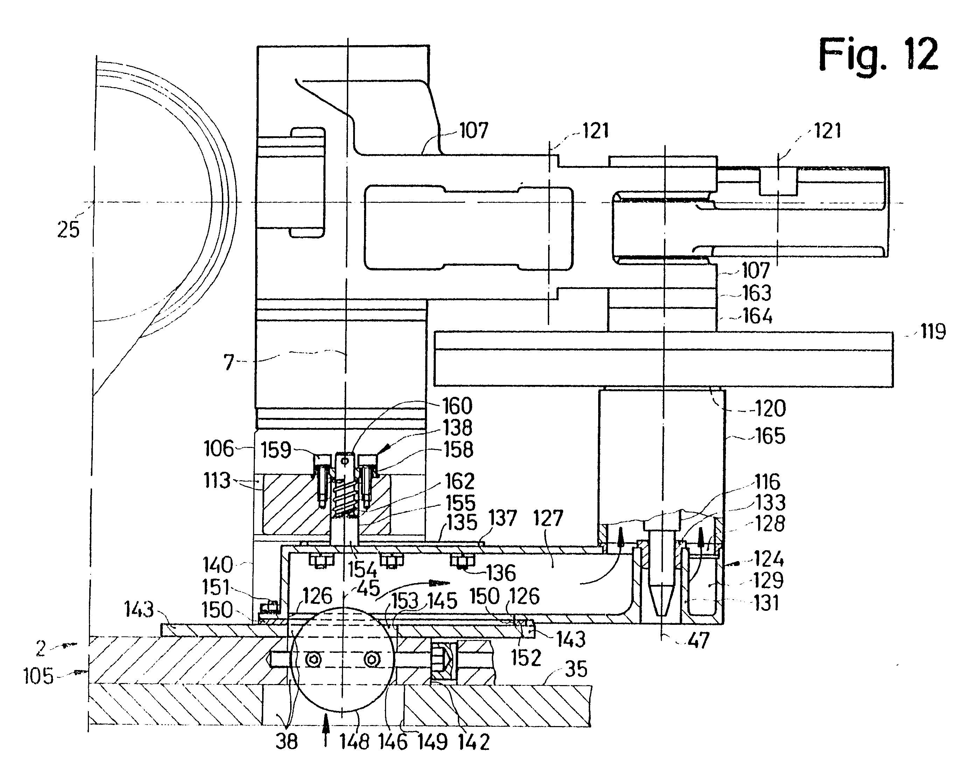

Gemäß der oberen Hälfte der Fig. 10 ist in jeden Hohlzylinder 131 eine Lagerbuchse 133 eingesetzt, die gemäß Fig. 12 an dem nach unten verlängerten Ende des Wippenbolzens 116 gelagert ist und von diesem schwenkend angetrieben wird.

Gemäß Fig. 10 sind auf die Oberseite jedes Gelenkkanalteils 124 parallel zu der Längsachse 125 zwei Führungsleisten 134 und 135 mit Senkschrauben 136 befestigt. Die Führungsleisten 134, 135 befinden sich in einem Abstand voneinander, der eine Führungsbahn 137 von gleichbleibender Breite definiert, deren Längsachse in einer senkrechten Ebene durch die Längsachse 125 liegt und stets die dritte Schwenkachse 45 schneidet. Dies wird durch eine im Zusammenhang mit den Fig. 11 und 12 näher zu beschreibende Führungsvorrichtung 138 erreicht. Die Führungsleisten 134, 135 bestehen aus gehärtetem und geschliffenem Stahl C 75.

Die Traverse 113 (Fig. 9) ist an in Fig. 10 im Schnitt erkennbaren Säulen 139, 140 und 141 befestigt, die unten durch eine gemeinsame Fußplatte 142 (Fig. 11 und 12) miteinander verbunden sind. Die Fußplatte 142 ist an der Kopfplatte 35 der Sektion 2 festgelegt.

An einer Oberseite der Fußplatte 142 ist für jedes Gelenkkanalteil 124 eine Gleitplatte 143 mit Senkschrauben 144 festgeschraubt. Die Gleitplatte 143 besteht aus gehärtetem und geschliffenem Stahl C 75 und ragt in Fig. 10 (vgl. auch Fig. 12) nach rechts hin über die Fußplatte 142 freitragend hinaus. Jede Gleitplatte 143 ist mit einer Bohrung 145 versehen, die mit einer gleichen Bohrung 146 in der Fußplatte 142 fluchtet. Beide Bohrungen 145, 146 sind koaxial mit der dritten Schwenkachse 45 und bilden das obere Ende des Zuführkanals 38 für die Kühlluft, die die Kühlvorrichtung in Richtung der in Fig. 12 eingetragenen Pfeile durchströmt.

Wie Fig. 10 und im einzelnen Fig. 12 zeigen, ist in der Fußplatte 142 eine waagerechte Achse 147 schwenkbar gelagert, die eine im wesentlichen der Querschnittsfläche der Bohrung 146 entsprechende Ventilklappe 148 trägt. Die Betätigung der Ventilklappe 148 kann z. B. entsprechend der Betätigung der Ventilklappe 39 in der Vorformstation 1 erfolgen. Der Bohrung 146 wird die Kühlluft gemäß Fig. 12 durch eine Durchbrechung 149 in der Kopfplatte 35 zugeführt.

Wie die Fig. 10 bis 12 zeigen, ist an der Unterseite jedes Gelenkkanalteils 124 eine die Einlaßöffnung 126 umgebende Schleißplatte 150 mit Senkschrauben 151 befestigt. Die Schleißplatte 150 besteht ebenfalls aus gehärtetem und geschliffenem Stahl C 75. Zwischen der Gleitplatte und der Schleißplatte 150 besteht eine Gleitdichtung 152, durch die aber kaum Kühlluft entweicht, weil die nachfolgend zu beschreibende Führungsvorrichtung 138 gleichzeitig für eine Anpressung der Schleißplatte 150 an die Gleitplatte 143 mit wählbarer Kraft sorgt. Die Bohrung 145 definiert eine Auslaßöffnung 153 des Zuführkanals 38.

Fig. 11 zeigt Einzelheiten der Führungsvorrichtung 138. In die Führungsbahn 137 ragt von oben ein Führungsfortsatz 154 eines Gleitsteins 155 hinein, der auf jeder Seite des Führungsfortsatzes 154 mit einer Gleitfläche 156 jeweils auf einer der Führungsleisten 134, 135 aufliegt. Der oberhalb des Führungsfortsatzes 154 eine kreisförmige Querschnittsfläche aufweisende Gleitstein 155 ist in einer senkrechten Bohrung 157 in der Traverse 113 sowohl in Richtung seiner Längsachse nach oben und unten hin verschiebbar als auch um seine mit der dritten Schwenkachse 45 koaxiale Längsachse schwenkbar gelagert. In das obere Ende der Bohrung 157 ist eine Haltebuchse 158 eingesetzt, die mit Schrauben 159 an der Traverse 113 festgelegt ist. Ein sich nach oben erstreckender Schaft 160 des Gleitsteins 155 ragt durch die Haltebuchse 158 hindurch nach außen und ist in einer Bohrung 161 der Haltbuchse 158 in radialer Richtung geführt. Zwischen dem Gleitstein 155 und der Haltebuchse 158 ist eine den Schaft 160 umgebende, als Druckfeder ausgebildete Feder 162 angeordnet. Die Feder 162 drückt einerseits die Gleitflächen 156 an die Führungsleisten 134, 135 und andererseits das Gelenkkanalteil 124 mit seiner Schleißplatte 150 an die Gleitplatte 143. Dadurch ist einerseits ausreichende Abdichtung im Bereich der Gleitdichtung 152 und andererseits eine kippsichere Führung des Gelenkkanalteils 124 bei seinen kombinierten Verschiebe- und Schwenkbewegungen erreicht. So bleibt die Einlaßöffnung 126 in jeder Betriebsphase in Verbindung mit der Auslaßöffnung 153.

Gemäß Fig. 12 ist jeder Wippenbolzen 116 nach unten hin so weit verlängert, daß ert die Lagerbuchse 133 durchdringt. Der Wippenbolzen 116 durchdringt einen an der Wippe 117 befestigten Bund 163. Zwichen dem Bund 163 und der Druckfluidverteilvorrichtung 119 ist ein ringförmiges Zwischenstück 164 angeordnet, das zusammen mit der Druckfluidverteilvorrichtung 119 an dem Bund 163 befestigt ist. Das Zwischenstück 164 wird in der axialen Länge so ausgewählt, daß die Druckfluidverteilvorrichtung 119 die für die jeweils benutzten Fertigformhälften 118 erforderliche Höhenlage erhält. Der Abstand zwischen der Druckfluidverteilvorrichtung 119 und der Auslaßöffnung 128 des Gelenkkanalteils 124 wird durch ein rohrförmiges Verlängerungsstück 165 von wählbarer axialer Länge überbrückt. Das Verlängerungsstück 165 kann sowohl relativ zu der Druckfluidverteilvorrichtung 119 als auch relativ zu dem Gekenkkanalteil 124 schwenken und ist in axialer Richtung so zu diesen beiden Anschlußteilen verschiebbar, daß es in axialer Richtung einen Toleranzausgleich vornehmen und dennoch ausreichende Dichtheit für die Kühlluft gewährleisten kann.

## Patentansprüche

1. Kühlvorrichtung für ein durch ein Druckfluid, insbesondere Luft, kühlbares Formwerkzeug (21 ; 118) einer Maschine zur Verarbeitung schmelzflüssigen Glases oder anderer thermoplastischer Stoffe, mit wenigstens einem raumfesten Zuführkanal (38) für das Druckfluid und mit einem jeden Zuführkanal (38) mit einer Druckfluidverteilvorrichtung (28 ; 119) für das relativ zu dem Zuführkanal (38) um eine erste Schwenkachse (7) schwenkbare Formwerkzeug (21 ; 118) verbindenden Anschlußkanal (48, 52 ; 124), der ein um eine zu der ersten Schwenkachse (7) parallele, relativ zu der Druckfluidverteilvorrichtung (28 ; 119) feste zweite Schwenkachse (47) schwenkbares Gelenkkanalteil (48 ; 124) aufweist, wobei eine Einlaßöffnung (76 ; 126) des Gelenkkanalteils (48 ; 124) in ständiger Verbindung mit einer Auslaßöffnung (153) des Zuführkanals (38) steht, dadurch gekennzeichnet, daß das Gelenkkanalteil (48 ; 124) in einer zu den Schwenkachsen (7, 47) rechtwinkligen verschiebeebene relativ zu dem Zuführkanal (38) verschiebbar ist.

2. Kühlvorrichtung nach Anspruch 1, dadurch gekennzeichnet, daß das Gelenkkanalteil (48) an einem weiteren Gelenkkanalteil (52) in der verschiebeebene verschiebbar geführt ist, und daß das weitere Gelenkkanalteil (52) um eine zu der ersten (7) und zweiten (47) Schwenkachse parallele, relativ zu dem Zuführkanal (38) feste dritte Schwenkachse (45) schwenkbar ist.

3. Kühlvorrichtung nach Anspruch 2, dadurch gekennzeichnet, daß das weitere Gelenkkanalteil (52) mit einem zu der dritten Schwenkachse (45) konzentrischen Lagerring (53) in einer die Auslaßöffnung des Zuführkanals (38) umgebenden Lagerbuchse (44) schwenkbar gelagert ist, und daß der Lagerring (53) einen die Auslaßöffnung des Zufürhkanals (38) und die Einlaßöffnung (76) des Gelenkkanalteils (48) miteinander verbindenden Verbindungskanal (54) umgibt.

4. Kühlvorrichtung nach Anspruch 3, dadurch gekennzeichnet, daß ein Außenflansch (55) des Lagerrings (53) durch einen längsgeteilten, an der Lagerbuchse (44) befestigten Haltering (58) in der Lagerbuchse (44) gehalten ist.

5. Kühlvorrichtung nach Anspruch 3 oder 4, dadurch gekennzeichnet, daß in einer durch die dritte Schwenkachse (45) verlaufenden Ebene an jeder Seite des Lagerrings (53) ein Nuttenstein (49, 50) an dem weiteren Gelenkkanalteil (52) montiert ist, und daß in wenigstens einer zu der Ebene parallelen seitlichen Nut (94 bis 97) jedes Nutensteins (49, 50) eine Führungsleiste (90 bis 93) des Gelenkkanalteils (48) verschiebbar geführt ist.

6. Kühlvorrichtung nach einem der Ansprüche 3 bis 5, dadurch gekennzeichnet, daß bei Benutzung eines gasförmigen Druckfluids die Gelenkkanalteile (48, 52) gegenüber einander und-/oder das weitere Gelenkkanalteil (52) gegenüber der Lagerbuchse (44) jeweils durch eine Spaltdichtung oder Gleitdichtung abgedichtet sind.

7. Kühlvorrichtung nach Anspruch 1, dadurch gekennzeichnet, daß die Auslaßöffnung (153) des Zuführkanals (38) in der verschiebeebene liegt, und daß das Gelenkkanalteil (124) außerdem um eine zu der ersten (7) und zweiten (47) Schwenkachse parallele, relativ zu dem Zuführkanal (38) feste dritte Schwenkachse (45) schwenkbar ist.

8. Kühlvorrichtung nach Anspruch 7, dadurch gekennzeichnet, daß an einer der verschiebeebene gegenüberliegenden Seite des Gelenkkanalteils (124) eine in einer durch die zweite (47) und dritte (45) Schwenkachse verlaufenden Ebene und rechtwinklig zu der zweiten (47) und dritten (45) Schwenkachse angeordnete Führungsbahn (137) für einen Gleitstein (155) vorgesehen ist, und daß der Gleitstein (155) maschinenfest um seine mit der dritten Schwenkachse (45) koaxiale Längsachse schwenkbar gelagert ist.

9. Kühlvorrichtung nach Anspruch 8, dadurch gekennzeichnet, daß der Gleitstein (155) in Richtung seiner Längsachse bewegbar und durch eine an der Maschine abgestützte Feder (162) gegen das Gelenkkanalteil (124) vorgespannt ist.

10. Kühlvorrichtung nach einem der Ansprüche 7 bis 9, dadurch gekennzeichnet, daß bei Benutzung eines gasförmigen Druckfluids das Gelenkkanalteil (124) gegenüber dem Zuführkanal (38) durch eine Spaltdichtung oder Gleitdichtung (152) abgedichtet ist.

11. Kühlvorrichtung nach einem der Ansprüche 2 bis 10, dadurch gekennzeichnet, daß die dritte Schwenkachse (45) koaxial mit der Längsachse der Auslaßöffnung (153) des Zuführkanals (38) ist.

12. Kühlvorrichtung nach einem der Ansprüche 1 bis 11, dadurch gekennzeichnet, daß die Einlaßöffnung (76 ; 126) des Gelenkkanalteils (48 ; 124) in Richtung der Verschiebung des Gelenkkanalteils (48 ; 124) langgestreckt ist.

## Claims

1. Cooling device for a forming tool (21 ; 118) of a machine for working molten glass or other thermoplastic material, the forming tool being arranged to be cooled by a pressurised fluid, particularly air, the cooling device comprising at least one stationary supply conduit (38) for the pressurised fluid and an extension conduit (48, 52 ; 124) connecting each supply conduit (38) to a pressurised fluid distributing device (28 ; 119) for the forming tool (21 ; 118), in which the forming tool is pivotable relative to the supply conduit (38) about a first pivot axis (7), in which the extension conduit comprises an articulated conduit portion (48 ; 124) which is pivotable about a second pivot axis (47) which is parallel to the first pivot axis (7) and is fixed relative to the pressurised fluid distributing device (28 ; 119), and in which an inlet opening (76 ; 126) of the articulated conduit portion (48 ; 124) is in constant communication with an outlet opening (153) of the supply conduit (38), characterised in that the articulated conduit portion (48 ; 124) is linearly displaceable relative to the supply conduit (38) in a displacement plane which is perpendicular to the pivot axes (7, 47).

2. Cooling device according to claim 1, characterised in that the articulated conduit portion (48) is linearly displaceably guided on a further articulated conduit portion (52) in the displacement plane, and in that the further articulated conduit portion (52) is pivotable about a third pivot axis (45) which extends parallel to the first (7) and second (47) pivot axes and is fixed in relation to the supply conduit (38).

3. Cooling device according to claim 2, characterised in that the further articulated conduit portion (52) is mounted pivotably on a bearing bush (44) encircling the outlet opening of the supply conduit (38) by means of a bearing ring (53) which is concentric with respect to the third pivot axis (45), and in that the bearing ring (53) surrounds a connecting conduit (54) connecting the outlet opening of the supply conduit (38) and the inlet opening (76) of the articulated conduit portion (48).

4. Cooling device according to claim 3, characterised in that an external flange (55) of the bearing ring (53) is held in the bearing bush (44) by means of a longitudinally split retaining ring (58) which is secured to the bearing bush (44).

5. Cooling device according to claim 3 or 4, characterised in that in a plane extending through the third pivot axis (45) there is mounted on each side of the bearing ring (53) a grooved block (49, 50) on the further articulated conduit portion (52), and in that a guide rib (90 to 93) of the articulated conduit portion (48) is displaceably guided in at least one lateral groove (94 to 97) of each grooved block (49, 50) extending parallel to said plane.

6. Cooling device according to one of claims 3 to 5, characterised in that with the use of a gaseous pressurised fluid the articulated conduit portions (48, 52) are sealed from each other and/or the further articulated conduit portion (52) is sealed from the bearing bush (44) by a gap seal or sliding seal.

7. Cooling device according to claim 1, characterised in that the outlet opening (153) of the supply conduit (38) lies in the displacement plane, and in that the articulated conduit portion (124) is also pivotable about a third pivot axis (45) which is parallel to the first (7) and second (47) pivot axes and which is fixed in relation to the supply conduit (38).

8. Cooling device according to claim 7, characterised in that on one side of the articulated conduit portion (124), opposed to the displacement plane, there is provided a guide track (137) for a slide block (155), the guide track being arranged in a plane extending through the second (47) and the third (45) pivot axes and perpendicular to the second (47) and third (45) pivot axes, and in that the slide block (155) is mounted fixedly relative to the machine and pivotably about its longitudinal axis which is coaxial with respect to the third pivot axis (45).

9. Cooling device according to claim 8, characterised in that the slide block (155) is movable in the direction of its longitudinal axis and is biased towards the articulated conduit portion (124) by a spring (162) which is supported against the machine.

10. Cooling device according to one of claims 7 to 9, characterised in that which the use of a gaseous pressurised fluid the articulated conduit portion (124) is sealed off from the supply conduit (38) by a gap seal or a sliding seal (152).

11. Cooling device according to one of claims 2 to 10, characterised in that the third pivot axis (45) is coaxial with respect to the longitudinal axis of the outlet opening (153) of the supply conduit (38).

12. Cooling device according to one of claims 1 to 11, characterised in that the inlet opening (76 ; 126) of the articulated conduit portion (48 ; 124) is elongated in the direction of the linear displacement of the articulated conduit portion (48 ; 124).

**Revendications**

1. Dispositif de refroidissement pour un outil de moulage (21 ; 118) refroidi par un fluide sous pression, en particulier par l'air, et appartenant à une machine pour le travail du verre fondu ou d'autres matières thermoplastiques, comprenant au moins un canal d'amenée (38) fixe dans l'espace, pour l'amenée du fluide sous pression, et un canal de raccordement (48, 52 ; 124), qui relie chaque canal d'amenée (38) à un dispositif de distribution de fluide sous pression (28 ; 119) pour l'outil de moulage (21 ; 118) qui peut pivoter par rapport au canal d'amenée (38) autour d'un premier axe de pivotement (7), canal de raccordement qui présente une partie (48 ; 124) de canal articulé qui peut pivoter autour d'un deuxième axe de pivotement (47) fixe par rapport au dispositif de distribution de fluide sous pression (28 ; 119) et parallèle au premier axe de pivotement (7), une ouverture d'entrée (76 ; 126) de la partie (48 ; 124) de canal articulé étant en liaison constante avec une ouverture de sortie (153) du canal d'amenée (38), caractérisé en ce que la partie (48 ; 124) de canal articulé est montée mobile en translation par rapport au canal d'amenée (38), dans un plan de translation perpendiculaire aux axes de pivotement (7, 47).

2. Dispositif de refroidissement selon la revendication 1, caractérisé en ce que la partie (48) de canal articulé est guidée mobile en translation sur une autre partie (52) de canal articulé, dans le plan de translation et en ce que l'autre partie (52) de canal articulé peut pivoter autour d'un troisième axe de pivotement (45) fixe par rapport au canal d'amenée (38) et parallèle au premier axe de pivotement (7) et au deuxième axe de pivotement (47).

3. Dispositif de refroidissement selon la revendication 2, caractérisé en ce que l'autre partie (52) de canal articulé est montée pivotante au moyen d'une bague de palier (53) concentrique au troisième axe de pivotement (45), dans une douille de palier (44) qui entoure l'ouverture de sortie du canal d'amenée (38) et en ce que la bague de palier (53) entoure un canal de liaison (54) qui relie l'une à l'autre l'ouverture de sortie du canal d'amenée (38) et l'ouverture d'entrée (76) de la partie (48) de canal articulé.

4. Dispositif de refroidissement selon la revendication 3, caractérisé en ce qu'une collerette extérieure (55) de la bague de palier (53) est tenue dans la douille de palier (44) par une bague de retenue (58) fendue longitudinalement et fixée à la bague de palier (44).

5. Dispositif de refroidissement selon la revendication 3 ou la revendication 4, caractérisé en ce qu'un coulisseau (49, 50) est monté sur ladite autre partie (52) de canal articulé, de chaque côté de la bague de palier (53), dans un plan qui passe par le troisième axe de pivotement (45) et en ce que, dans au moins une rainure latérale (94 à 97) de chaque coulisseau (49, 50) qui est parallèle au plan, est guidée mobile en translation une barrette de guidage (90 à 93) de la partie (48) de canal articulé.

6. Dispositif de refroidissement selon l'une des revendications 3 à 5, caractérisé en ce que, dans le cas d'utilisation d'un fluide sous pression gazeux, les parties (48, 52) de canal articulé sont étanchées l'une par rapport à l'autre et/ou l'autre partie (52) de canal articulé par rapport à la douille de palier (44), chacune par une garniture d'étanchéité à interstice une garniture d'étanchéité de joint glissant.

7. Dispositif de refroidissement selon la revendication 1, caractérisé en ce que l'ouverture de sortie (153) du canal d'amenée (38) se trouve dans le plan de translation et en ce que la partie (124) de canal articulé est en outre mobile en translation autour d'un troisième axe de pivotement (45) fixe par rapport au canal d'amenée (38) et parallèle au premier axe de pivotement (7) et au deuxième axe de pivotement (47).

8. Dispositif de refroidissement selon la revendication 7, caractérisé en ce qu'il est prévu, sur un côté de la partie (124) de canal articulé qui est à l'opposé du plan de translation, une glissière (137) prévue pour un coulisseau (155) et disposée dans un plan qui passe par le deuxième axe de pivotement (47) et le troisième axe de pivotement (45) et qui est disposée perpendiculairement au deuxième axe de pivotement (47) au troisième axe de pivotement (45), et en ce que le coulisseau (155) est arrangé fix par rapport à la machine et de façon à pouvoir pivoter autour de son axe longitudinal coaxial au troisième axe de pivotement (45).

9. Dispositif de refroidissement selon la revendication 8, caractérisé en ce que le coulisseau (155) est mobile dans la direction de son axe longitudinal et est appuyé contre la partie (124) de canal articulé avec précontrainte par un ressort (162) qui prend appui sur la machine.

10. Dispositif de refroidissement selon l'une des revendications 7 à 9, caractérisé en ce que, dans le cas où l'on utilise un fluide sous pression gazeux, la partie (124) de canal articulé est montée à joint étanche par rapport au canal d'amenée (38) par une garniture d'étanchéité à interstice ou une garniture d'étanchéité de joint glissant (152).

11. Dispositif de refroidissement selon l'une des revendications 2 à 10, caractérisé en ce que le troisième axe de pivotement (45) est coaxial à l'axe longitudinal de l'ouverture de sortie (153) du canal d'amenée (38).

12. Dispositif de refroidissement selon l'une des revendications 1 à 11, caractérisé en ce que l'ouverture d'entrée (76 ; 126) de la partie (48 ; 124) de canal articulé est allongée dans la direction de la translation de la partie (48 ; 124) de canal articulé.

Fig.1

# Fig. 2

**0 125 488**

Fig. 3

Fig. 4

0 125 488

# Fig. 5

# Fig. 6

# Fig. 7

# Fig. 8

Fig. 9

# Fig. 10

# Fig.11

Fig. 12